# EUROPÄISCHE PATENTSCHRIFT

(11) **EP 3 996 207 B1**
(45) Veröffentlichungstag und Bekanntmachung des Hinweises auf die Patenterteilung: **26.06.2024**
(21) Anmeldenummer: 21205022.3
(22) Anmeldetag: 27.10.2021
(51) Int. Cl.: H01R 4/18, H01R 11/09, H01R 4/34, H01R 9/05, H01R 11/05

(54) **ERDUNGSSCHELLE MIT VERDREHSCHUTZ**
GROUNDING CLAMP WITH ANTI-TORSION PROTECTION
COLLIER DE SERRAGE DE MISE À LA TERRE À PROTECTION CONTRE LA ROTATION

(30) Priorität: 06.11.2020 DE 202020106373 U
(43) Veröffentlichungstag der Anmeldung: 11.05.2022
(73) Patentinhaber: MD Elektronik GmbH, 84478 Waldkraiburg (DE)
(72) Erfinder: Schweiger, Florian, 84424 Isen (DE); Lang, Walter, 84478 Waldkraiburg (DE); Schnobrich, Sabrina, 84478 Waldkraiburg (DE); Huber, Hubert, 83527 Kirchdorf (DE); Huber, Markus, 83527 Kirchdorf (DE)

(56) Entgegenhaltungen:
- DE-A1-102016 223 522
- DE-T5-112013 000 558
- US-A1- 2006 189 184
- US-A1- 2017 155 200

## Beschreibung

### Technisches Gebiet

Die vorliegende Erfindung betrifft eine Erdungsschelle zum Befestigen und elektrischen Kontaktieren von zwei Kabeln an einer separaten Oberfläche.

### Stand der Technik

Erdungsschellen werden in der Automobilindustrie verwendet, um elektrische Leitungen bzw. Kabel in einem Fahrzeug an bestimmten Stellen zu fixieren und die Masseleitung eines Kabels mit der Fahrzeugkarosserie zu verbinden, d.h. zu erden. Kabel, die in einem Fahrzeug verlegt werden, sind z.B. Antennenleitungen für ein Antennenradio, und können Koaxialkabel sein. Durch die Fixierung wird das Kabel auf einem vorbestimmten Pfad durch das Fahrzeug verlegt. Die Verbindung der Masseleitung des Kabels mit der Fahrzeugkarosserie, die elektrisch leitend ist bzw. sein muss, legt das Potential der Masseleitung auf das Massepotential der Karosserie, und erdet somit die Leitung.

In bisherigen Anwendungen wurde für die Fixierung von zwei, insbesondere parallel verlaufenden, Kabeln jeweils eine einzelne Erdungsschelle verwendet, wobei die beiden Erdungsschellen bei der Montage in dem Fahrzeug ineinandergesteckt wurden. Durch die Verwendung von zwei einzelnen Erdungsschellen erhöhte sich jedoch die Komplexität bei der Montage der Leitungssätze in einem Fahrzeug.

Die Druckschrift DE 10 2006 008 056 B4 beschreibt eine Erdungsplatte zum Fixieren und Erden von Koaxialkabeln. Die Erdungsplatte weist zumindest eine Platte auf, an deren einem Ende zwei Koaxialkabel aufgenommen werden können. Beabstandet von dem Aufnahmebereich der Koaxialkabel weist die Platte ein Schraubenloch auf, durch das eine Schraube geführt wird, um die Erdungsplatte zu fixieren. Treten an der Erdungsplatte Drehmomente, z.B. aufgrund von Zugkräften an den Kabeln, auf, so kann die Schraubenverbindung an dem Schraubenloch ungewollt gelockert bzw. gelöst werden.

Die Druckschrift US 2017 / 155 200 A1 betrifft ein Verbindungsverfahren für ein Anschlußpaßstück, bei dem das Anschlußpaßstück einen Anschlußkörper und eine Vielzahl von Anschlußverbindungsabschnitten aufweist, die sich von dem Anschlußkörper erstrecken. Die Druckschrift DE 10 2016 223 522 A1 betrifft eine Verbindungsstruktur für ein Anschluss-Passteil, die das Anschluss-Passteil enthält. Das Anschluss-Passteil enthält einen Anschluss-Körper sowie eine Vielzahl von Anschluss-Verbindungsabschnitten, die sich von dem Anschluss-Körper aus erstrecken, und Verbindungs-Anschlüsse, die mit Leitern verbunden sind.

Die Druckschrift DE 11 2013 000 558 T5 betrifft eine Anschluss-Draht-Anordnung, in welcher eine Mehrzahl von Drähten, welche gemischt einen Kupferdraht und einen Aluminiumdraht beinhalten, gemeinsam mit einem vorbestimmten Querschnitt mit hoher Zuverlässigkeit verbunden werden kann, sowie einen Erdungsanschluss, der zwei drahtseitige Anschlussabschnitte beinhaltet, wobei sich daran angeschlossene Drähte von dem Erdungsanschluss erstrecken.

### Beschreibung der Erfindung

Es ist daher eine Aufgabe der vorliegenden Erfindung eine Erdungsschelle für zumindest zwei Kabel bereitzustellen, die einfach montierbar ist und eine ungewollte Lockerung bzw. Lösung der Erdungsschelle verhindert.

Die erfindungsgemäße Aufgabe wird durch eine Erdungsschelle mit den Merkmalen des unabhängigen Anspruchs 1 gelöst. Weitere vorteilhafte Ausgestaltungsformen der Erfindung lassen sich den Unteransprüchen 2 bis 8, der Beschreibung sowie den Zeichnungen entnehmen.

Insbesondere wird die Aufgabe gelöst durch eine Erdungsschelle zum Befestigen und elektrischen Kontaktieren von zumindest zwei Kabeln an einer separaten Oberfläche. Die Erdungsschelle weist dabei eine Platte mit einer ersten Längskante und einer, der ersten Längskante gegenüberliegenden, zweiten Längskante, auf, wobei sich beide Längskanten in einer ersten Richtung der Platte erstrecken. Sowie eine erste Querkante und eine, der ersten Querkante gegenüberliegenden, zweite Querkante, wobei sich beide Querkanten senkrecht zur ersten und zweiten Längskante in einer zweiten Richtung der Platte erstrecken. Weiterhin weist die Erdungsschelle einen ersten Kabelbefestigungsbereich zum Befestigen und elektrischen Kontaktieren eines ersten Kabels an der Platte, auf, wobei sich der erste Kabelbefestigungsbereich entlang der ersten Querkante erstreckt. Sowie einen zweiten Kabelbefestigungsbereich zum Befestigen und elektrischen Kontaktieren eines separaten zweiten Kabels an der Platte, wobei sich der zweite Kabelbefestigungsbereich entlang der zweiten Querkante erstreckt. Außerdem weist die Erdungsschelle eine zwischen dem ersten und zweiten Kabelbefestigungsbereich angeordnete Öffnung zum Einführen eines Befestigungsmittels, eine erste Lasche, die sich zwischen dem ersten und zweiten Kabelbefestigungsbereich parallel zur ersten Querkante und senkrecht zur Plattenebene in Richtung einer Unterseite der Platte erstreckt, und eine zweite Lasche, die sich zwischen dem ersten und zweiten Kabelbefestigungsbereich parallel zur zweiten Querkante und senkrecht zur Plattenebene in Richtung der Unterseite der Platte erstreckt, auf.

Die Erdungsschelle wird als einstückiges Bauteil gefertigt. Somit können zwei separate Kabel mit nur einer Erdungsschelle befestigt und elektrisch kontaktiert werden. Dies spart Zeit bei der Montage, und die Anzahl der Bauteile ist reduziert gegenüber z.B. einer Anordnung aus zwei einzelnen Erdungsschellen für jeweils ein Kabel. Die zumindest zwei Kabel verlaufen im Bereich der Erdungsschelle bevorzugt parallel zueinander. Die beiden Kabel werden bei der Erdungsschelle weiterhin in einem Abstand, der einer Seitenlänge der Erdungsschelle entspricht, gehalten. Durch diesen Abstand werden ungewollte Verwicklungen der beiden Kabel vermieden. Außerdem werden die beiden Kabel in Kabelbefestigungsbereichen aufgenommen. Für eine vereinfachte Kabelaufnahme, weisen die Kabelbefestigungsbereiche jeweils eine Kabelführung und zumindest zwei U-förmige bzw. V-förmige Aufnahmebereiche aus jeweils zumindest zwei Crimplaschen, auf. Die Aufnahmebereiche mit jeweils zumindest zwei Crimplaschen sind auch die Crimpbereiche zur Befestigung der Kabel an der Erdungsschelle.

Die Öffnung in der Platte der Erdungsschelle ermöglicht das Ein- bzw. Durchführen eines Befestigungsmittels, wie einer Schraube oder eines Bolzens. Über das Befestigungsmittel kann die Erdungsschelle einfach, schnell und sicher an einer separaten Oberfläche befestigt werden. Bevorzugt ist die Öffnung mittig zwischen dem ersten und zweiten Kabelbefestigungsbereich angeordnet. Da die Öffnung in der Mitte zwischen den beiden Kabelbefestigungsbereichen liegt, ist die Erdungsschelle insgesamt platzsparend und kompakt.

Die erste und zweite Lasche stehen in Richtung der Unterseite der Platte insbesondere senkrecht von der Platte ab. Durch die flächenhafte Form der beiden Laschen kann ein Drehen der Erdungsschelle verhindert werden, indem die beiden Laschen bevorzugt bündig an einer weiteren Oberfläche oder Aussparung anliegen, und so an einer Drehbewegung gehindert werden. Im verbauten Zustand bilden die beiden Laschen einen Verdrehschutz für die Erdungsschelle. Darüber hinaus sind, durch die Anordnung der Laschen zwischen dem ersten und zweiten Kabelbefestigungsbereich, etwaige auftretende Hebelwirkungen, beim Versuch die Erdungsschelle zu drehen, gering bzw. treten diese nicht auf. Ungewollte Drehmomente auf die Erdungsschelle, durch die eine Hebelwirkungen hervorgerufen werden kann, können durch Bewegungen bzw. Kräfte auf den Kabeln, die an der Erdungsschelle befestigt sind, auftreten.

Optional erstreckt sich die erste Lasche entlang der ersten Querkante und die zweite Lasche entlang der zweiten Querkante. Bei dieser Ausführungsform ermöglicht das Abstehen der Laschen von der Platte, dass die beiden Laschen in entsprechende Aussparungen in einer separaten Oberfläche, auf der die Erdungsschelle angeordnet werden soll, eingeführt werden können. Die entsprechenden Aussparungen in der separaten Oberfläche sind so eingerichtet, dass sie jeweils eine Lasche verdrehsicher aufnehmen. Die bei der Montage in die entsprechenden Aussparungen auf der separaten Oberfläche eingefügten Laschen der Erdungsschelle, die sich nicht drehen können, verhindern ein Drehen der gesamten Erdungsschelle gegenüber der separaten Oberfläche.

Optional erstreckt sich die erste Lasche in einem ersten Abstand zur Öffnung, zwischen der Öffnung und der ersten Querkante, und die zweite Lasche in dem ersten Abstand zur Öffnung, zwischen der Öffnung und der zweiten Querkante, so dass die Erdungsschelle mit der ersten und zweiten Lasche verdrehsicher auf einem Teil eines Befestigungsmittels, das in der Öffnung anordbar ist, anordbar ist. Bevorzugt ist das Befestigungsmittel in einer Ausführungsform ein Bolzen mit Bolzenmutter. Die Bolzenmutter, die am Bolzen montiert werden kann, ist bevorzugt schlüssig zwischen der ersten und zweiten Lasche angeordnet. Diese Ausführungsform ermöglicht das verdrehsichere Aufsetzen der Erdungsschelle auf einen Bolzen mit einer Bolzenmutter. Die kantige Außenform der Bolzenmutter, z.B. eine Achtkantform, passt mit zwei gegenüberliegenden Kanten genau zwischen die erste und zweite Lasche der Erdungsschelle und verhindert, blockiert, eine Drehbewegung der Laschen, und somit der Erdungsschelle. Darüber hinaus sind durch das verdrehsichere Aufsetzen der Erdungsschelle auf einer Bolzenmutter, keine Aussparungen für die Laschen als Verdrehsicherung in der separaten Oberfläche notwendig.

Optional ist die Öffnung kreisförmig. Die radialsymmetrische Kreisform hat bei der Montage der Erdungsschelle den Vorteil, dass die Erdungsschelle zunächst unabhängig von ihrer horizontalen Orientierung auf ein vertikal ausgerichtetes Befestigungsmittel aufgesteckt werden kann. Nach dem Aufstecken auf das Befestigungsmittel kann die Erdungsschelle durch eine einfache Drehbewegung in ihre endgültige Montageposition ausgerichtet werden. Dies erleichtert die Montage der Erdungsschelle.

Optional weist die Erdungsschelle ein elektrisch leitfähiges Material auf, so dass eine elektrische Verbindung zwischen zumindest einem befestigbaren elektrischen Kabel und dem in die Öffnung einführbaren Befestigungsmittel besteht. Bevorzugt weist das Befestigungsmittel auch ein elektrisch leitfähiges Material auf. Aufgrund der elektrischen Leitfähigkeit der Erdungsschelle kann die Masseleitung des zumindest einen an der Erdungsschelle befestigtem Kabel über das Befestigungsmittel mit der Masse der separaten Oberfläche, z.B. einer Fahrzeugkarosserie, verbunden werden.

Optional ist die Erdungsschelle spiegelsymmetrisch zu einer Spiegelachse aufgebaut, und die Spiegelachse erstreckt sich parallel zur ersten und zweiten Querkante durch den Mittelpunkt der Öffnung. Durch den spiegelsymmetrischen Aufbau gibt es zumindest zwei Möglichkeiten die Erdungsschelle in Ihrer jeweiligen Endposition zu montieren. Das erhöht die Flexibilität bei der Montage. Weiterhin können sich durch den spiegelsymmetrischen Aufbau, durch Druck- und/oder Zugbewegungen an den Kabeln, auftretende Kräfte ausgleichen, so dass effektiv keine oder nur geringe Drehmomente an der Erdungsschelle auftreten. Somit werden ungewollte Belastungen auf die Erdungsschelle vermieden, wodurch die Lebensdauer der Erdungsschelle erhöht wird.

Optional weist der erste und zweite Kabelbefestigungsbereich jeweils eine Kabelführung und zumindest einen ersten und einen zweiten Crimpbereich, an gegenüberliegenden Enden der jeweiligen Kabelführung, auf. Die Kabelführung erleichtert das Anordnen des jeweiligen Kabels in dem Kabelbefestigungsbereich. Die Anordnung von jeweils zwei Crimpbereichen an gegenüberliegenden Enden eines Kabelbefestigungsbereichs erhöht die Sicherheit der Befestigung durch Redundanz und sorgt gleichzeitig für eine parallele Ausrichtung der beiden Kabel im Bereich der Erdungsschelle. Die parallele Ausrichtung verhindert ein ungewolltes Berühren oder Verdrehen der beiden Kabel.

Optional ist die Platte eine längliche Platte, und die erste Richtung ist die Längsrichtung der Platte. Die längliche Plattenform gibt der Erdungsschelle eine gut erkennbare Orientierung, so dass die Montage der Erdungsschelle, mit dem passenden Ausrichten der beiden Laschen in Bezug auf die entsprechenden Öffnungen in der separaten Oberfläche oder den Kanten der Bolzenmutter, erleichtert wird.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigt:
- Fig. 1: eine isometrische Ansicht einer ersten Ausführungsform;
- Fig. 2: eine Draufsicht auf die erste Ausführungsform;
- Fig. 3: eine Seitenansicht der ersten Ausführungsform entlang einer ersten Richtung;
- Fig. 4: eine Seitenansicht der ersten Ausführungsform entlang einer zweiten Richtung;
- Fig. 5: eine isometrische Ansicht einer zweiten Ausführungsform;

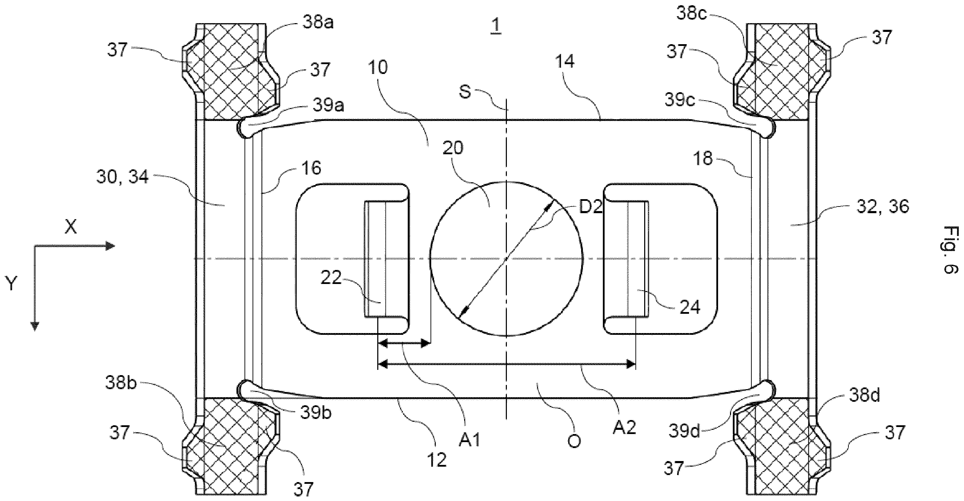

- Fig. 6: eine Draufsicht auf die zweite Ausführungsform;

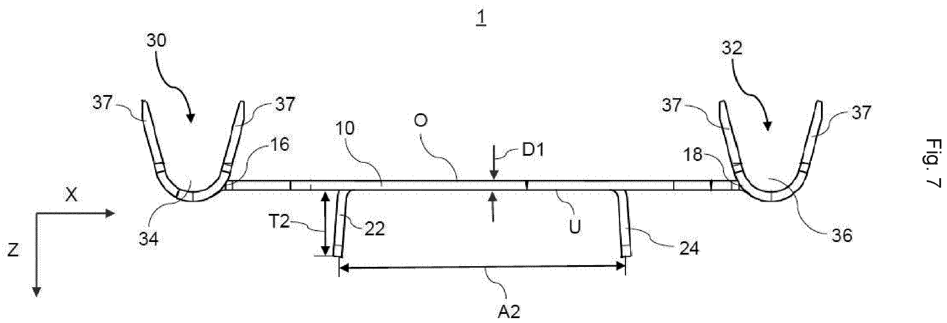

- Fig. 7: eine Seitenansicht der zweiten Ausführungsform entlang einer ersten Richtung; und

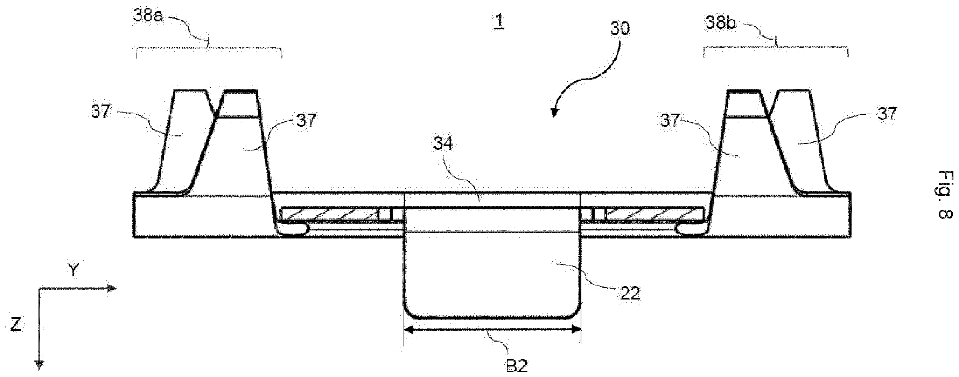

- Fig. 8: eine Seitenansicht der zweiten Ausführungsform entlang einer zweiten Richtung.

Die mit Bezug auf die Figuren gemachten Erläuterungen sind rein beispielhaft und nicht beschränkend zu verstehen.

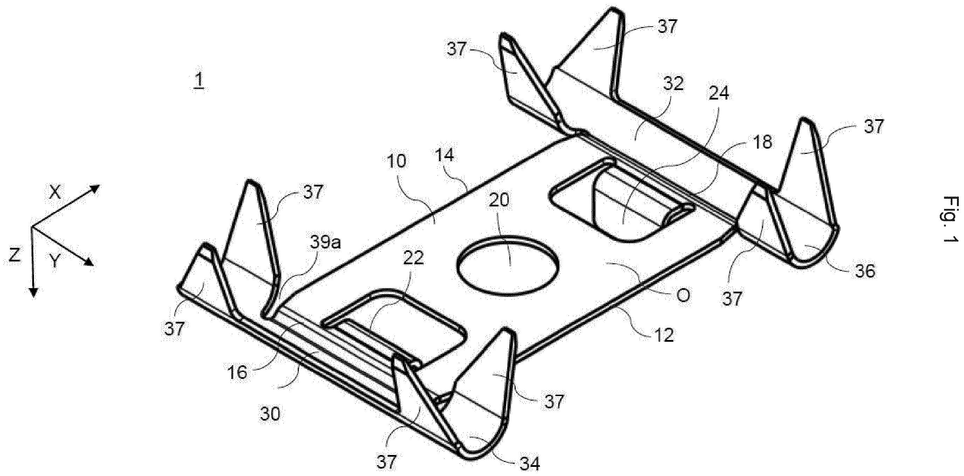

Fig. 1 zeigt eine erste Ausführungsform der Erdungsschelle 1. Die Erdungsschelle weist eine rechteckige Platte 10 mit einer ersten und einer zweiten Längskante 12, 14 in Längsrichtung X, und einer ersten und einer zweiten Querkante 16, 18 in Querrichtung Y, senkrecht zur Längsrichtung X, auf. Die Kanten 12, 14, 16, 18 der Platte 10 sind ohne die Kabelbefestigungsbereiche 30, 32 betrachtet. In einer anderen Ausführungsform kann die Platte 10 auch eine quadratische Form aufweisen.

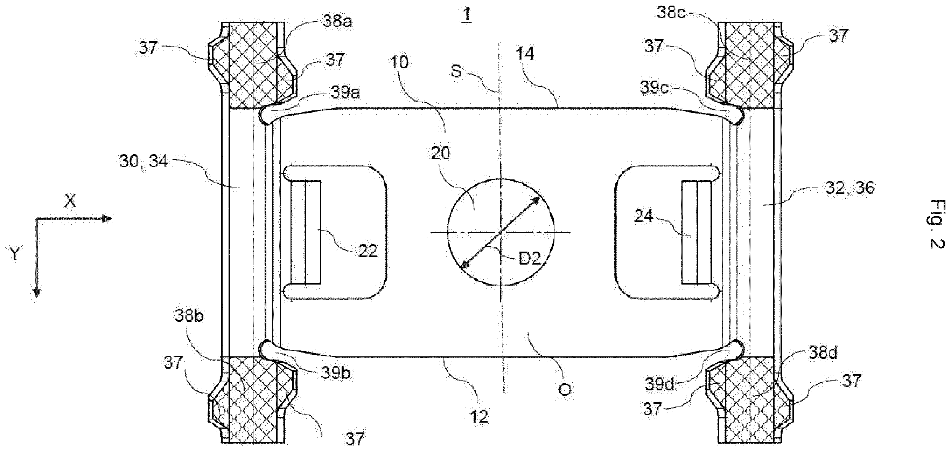

Die Erdungsschelle 1 ist eingerichtet je ein Kabel, bevorzugt Koaxialkabel, in jeweils einem Kabelbefestigungsbereich 30, 32 aufzunehmen. Der erste bzw. zweite Kabelbefestigungsbereich 30, 32 erstreckt sich jeweils entlang der ersten bzw. zweiten Querkante 16, 18 der Platte 10. An jedem Ende eines Kabelbefestigungsbereichs 30, 32 in Querrichtung Y ist ein Crimpbereich 38a, b, c oder d angeordnet (s. Fig. 2). Zum Befestigen eines Kabels an der Erdungsschelle 1 wird das Kabel in dem ersten oder zweiten Kabelbefestigungsbereich 30, 32 ausgerichtet. Eine erste bzw. zweite Kabelführung 34, 36 vereinfacht dabei die Anordnung des Kabels. Weiterhin weisen die Crimpbereiche 38a, b, c, d eine U-förmige bzw. V-förmige Verjüngung zur Kabelführung 34, 36 des jeweiligen ersten oder zweiten Kabelbefestigungsbereichs 30, 32 auf. Die Verjüngung ist in jedem Crimpbereich 38a, b, c, d durch zumindest zwei gegenüberliegenden Crimplaschen 37 gebildet. Eine Länge der Crimplaschen 37 ist bevorzugt an die Kabeldicke angepasst. Je dicker das zumindest eine zu befestigende Kabel ist, desto länger sind die entsprechenden Crimplaschen 37 ausgebildet. Zur Befestigung eines Kabels werden die Crimplaschen beider Crimpbereiche 38a, b bzw. 38c, d zur Kabelmitte hin umgebogen und das Kabel wird mit den Crimplaschen vercrimpt. Bevorzugt weisen die Crimpbereiche 38a, b, c, d eine strukturierte Oberfläche auf, um eine bessere, insbesondere haltbarere, Befestigung beim Crimpen zu erreichen. Durch das Crimpen ist das Kabel fest mit der Erdungsschelle 1 verbunden. Die vercrimpten Crimplaschen 37 können weiterhin einen direkten Kontakt zu einer Masseleitung des Kabels aufweisen. Bevorzugt wurde für diesen direkten Kontakt die Masseleitung des Kabels in den Crimpbereichen 38a, b bzw. 38c, d abisoliert. Der direkte Kontakt führt zu einer elektrischen Verbindung von Masseleitung des Kabels und der Erdungsschelle 1.

Weiterhin kann die Erdungsschelle 1 über ein Befestigungsmittel, wie eine Schraube oder einen Bolzen, das durch die Öffnung 20 auf der Platte 10 geführt wird, an einem separaten Körper bzw. einer Oberfläche befestigt werden. Das Befestigungsmittel ist dabei, wie die Erdungsschelle 1, bevorzugt elektrisch leitfähig und insbesondere aus Metall. Durch die elektrische Leitfähigkeit der Bauteile kann eine elektrische Verbindung zwischen den an der Erdungsschelle 1 befestigten Kabeln, insbesondere den Masseleitungen der Kabel, und der Oberfläche, auf der die Erdungsschelle 1 befestigt ist, hergestellt werden.

Fig. 2 zeigt eine Draufsicht auf die erste Ausführungsform der Erdungsschelle 1. Die Erdungsschelle 1 ist symmetrisch zu einer Spiegelachse S. Die Spiegelachse S verläuft durch den Mittelpunkt der Öffnung 20 und ist parallel zu den beiden Querkanten 16, 18. Durch den symmetrischen Aufbau verlaufen die beiden Kabelbefestigungsbereiche 30, 32 parallel zueinander in einem Abstand, der der Länge der ersten bzw. zweiten Längskante 12, 14 entspricht. Der Abstand zwischen den Kabelbefestigungsbereichen 30, 32 ist der maximal mögliche Abstand in Bezug auf die Platte 10. Weiterhin verläuft die Öffnung 20 genau in der Mitte der Platte 10, wodurch eine kompakte Größe der Erdungsschelle 1 erreicht wird.

Durch den symmetrischen Aufbau der Erdungsschelle 1 werden weiterhin Drehmomente ausgeglichen bzw. verhindert, die auftreten können, wenn Zugkräfte an den Kabeln wirken und/oder der Abstand zwischen jedem Kabel und der Öffnung 20 unterschiedlich ist.

Fig. 2 zeigt weiterhin einen Versatz von gegenüberliegenden Crimplaschen 37. Dieser Versatz verbessert das Ergebnis beim Crimpen und stärkt die Befestigung der Kabel an der Erdungsschelle 1. Insbesondere verbessert eine Freimachung 39a, b, c, d in dem jeweiligen Crimpbereich 38a, b, c, d das Ergebnis des Crimpens, da ein Fließen des Materials beim Crimpvorgang ermöglicht wird.

Die Öffnung 20 weist einen Durchmesser D2 auf. Der Durchmesser D2 ist an das zu verwendende Befestigungsmittel angepasst und nimmt das Befestigungsmittel bevorzugt radial abschließend auf. Der Durchmesser D2 der ersten Ausführungsform und der Durchmesser D2 einer zweiten Ausführungsform können unterschiedlich sein. Bevorzugt ist der Durchmesser D2 der zweiten Ausführungsform größer als der Durchmesser D2 der ersten Ausführungsform. Ein größerer Durchmesser ermöglich das Einführen eines dickeren Befestigungsmittels, was bei gleicher Beschaffenheit stabiler ist.

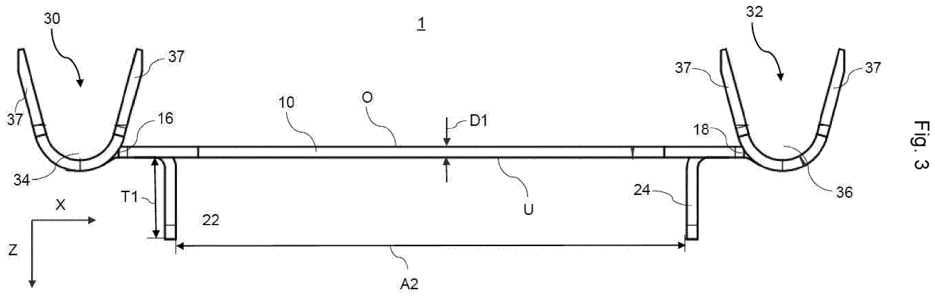

Fig. 3 zeigt eine Seitenansicht der ersten Ausführungsform der Erdungsschelle 1, so dass ein Teil der Unterseite U der Erdungsschelle 1 sichtbar ist. Die Platte 10 weist eine Dicke D1 auf. Die Dicke D1 entspricht auch der Dicke der Laschen 22 und 24. Bevorzugt sind die Laschen 22 und 24 durch ein Verbiegen von Teilbereichen der Platte 10 gebildet. Die erste und zweite Lasche 22, 24 sind identisch. Beide Laschen stehen mit einer Tiefe T1 von der Platte 10 ab, d.h. die Länge der Laschen 22, 24 in einer Richtung Z auf die Unterseite U der Platte 10 entspricht der Tiefe T1. Insgesamt bilden beide Laschen eine rechteckige, flächenhafte Form mit einer ersten Breite B1 in der ersten Ausführungsform und einer zweiten Breite B2 in einer zweiten Ausführungsform. Die erste und zweite Breite B1, B2 können identisch sein. Bevorzugt stehen die Laschen 22, 24 senkrecht von der Platte 10 ab. Eine Neigung der Laschen 22, 24 von bis zu 10 Grad in beide Richtungen von der Plattennormalen ist in einer anderen Ausführungsform möglich.

In der ersten Ausführungsform werden bei der Montage bzw. Befestigung der Erdungsschelle 1 auf einer separaten Oberfläche die erste und zweite Lasche 22, 24 in entsprechende Aussparungen in der separaten Oberfläche eingeführt. Die Aussparungen sind im Wesentlichen abschließend mit einer Lasche, so dass sich eine Lasche nicht bzw. nur unwesentlich in der Aussparung bewegen kann. Somit sitzt die Erdungsschelle 1 verdrehsicher auf der separaten Oberfläche auf. Insbesondere beim Anziehen einer Befestigungsschraube als Befestigungsmittel, wird die Erdungsschelle verdrehsicher in ihrer Position gehalten.

Weiterhin sind in der ersten Ausführungsform die beiden Laschen 22, 24 unmittelbar an der jeweiligen Querkante 16, 18 in Richtung der Unterseite U der Platte 10 gebogen. Der Abstand zwischen dem ersten Kabelbefestigungsbereich 30 und der ersten Lasche 22 in einer ersten Richtung bzw. Längsrichtung X ist so gering wie möglich. Gleiches gilt für den Abstand zwischen dem zweiten Kabelbefestigungsbereich 32 und der zweiten Lasche 24. Durch die geringen Abstände der Laschen 22, 24 zu den Kabelbefestigungsbereichen 30, 32 ist ein möglicher Hebelarm, der an einem Kabelbefestigungsbereich 30, 32 ansetzt, zwischen Kabelbefestigungsbereich 30, 32 und Befestigungsmittel in der Öffnung 20 stark verkürzt bzw. behindert. So können Drehmomente an der Erdungsschelle 1, die durch Zugkräfte auf den Kabeln auftreten können, verhindert werden. Darüber hinaus verteilen sich möglicherweise auftretenden horizontalen Zugkräften an der Schelle, auf zumindest drei Punkte, d.h. das Befestigungsmittel in der Öffnung 20 sowie die beiden Laschen 22, 24 in den entsprechenden Aussparungen, was zu einer Reduzierung der Belastung der Erdungsschelle 1 und einer längeren Lebensdauer führt.

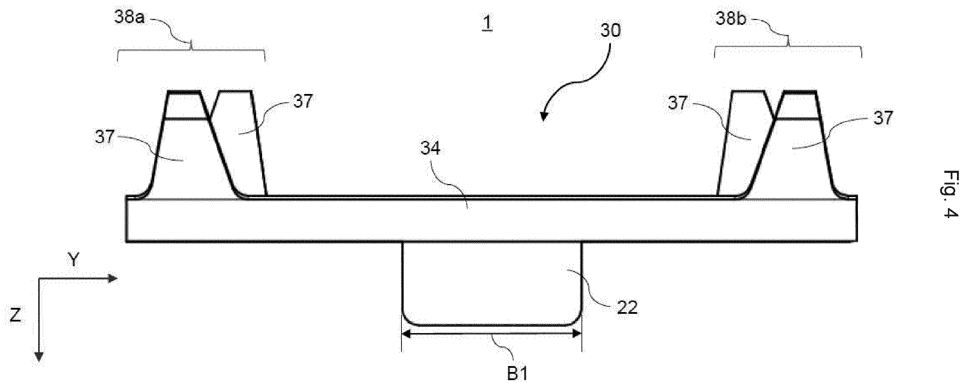

Der erste und zweite Kabelbefestigungsbereich 30, 32 in Fig. 3 weist einen U-förmigen bzw. V-förmigen Querschnitt auf. Die Schenkel der U- bzw. V-Form werden von den jeweils zumindest zwei benachbarten Crimplaschen 37 in einem Crimpbereich 38a, b, c, d gebildet. Ein Verbindungstück zwischen jeweils benachbarten Crimplaschen 37 auf Höhe der Platte 10 bildet eine Kabelführung 34, 36 in Form einer Rinne. Die Rinne erleichtert die Kabelanordnung. Die Kabelführung 34, 36 in Form einer Rinne verbindet in jedem Kabelbefestigungsbereich 30, 32 die jeweils zwei Crimpbereiche 38a, b bzw. 38c, d miteinander (siehe Fig. 4).

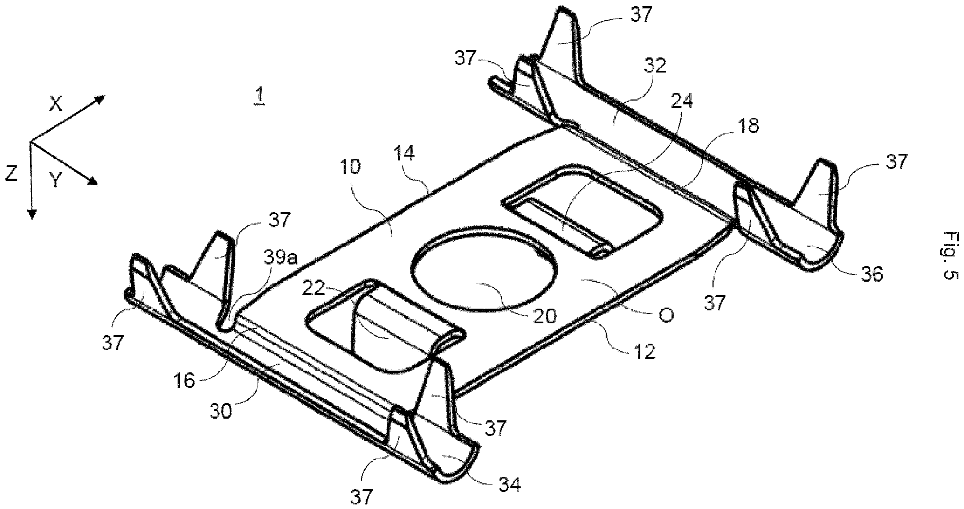

Fig. 5 zeigt eine zweite Ausführungsform der Erdungsschelle 1. Die zweite Ausführungsform unterscheidet sich von der ersten Ausführungsform zumindest darin, dass die erste und zweite Lasche 22, 24 nicht direkt an der ersten bzw. zweiten Querkante 16, 18 sondern mittig der Platte 10 ausgebildet sind. Die beiden Laschen 22, 24 erstrecken sich dabei in einem geringen ersten Abstand A1 parallel zu einer jeweils gedachten Tangente an gegenüberliegenden Seiten der Öffnung 20, in eine Richtung Z zur Unterseite U der Platte 10. Bevorzugt sind die beiden Laschen 22, 24 durch Biegen von entsprechenden Teilstücken der Platte 10 gebildet.

In der zweiten Ausführungsform ist der erste Abstand A1, zwischen einer Lasche 22, 24 und der entsprechenden gedachten Tangente der Öffnung 20, so gewählt, dass ein zweiter Abstand A2 zwischen der ersten und zweiten Lasche 22, 24 im Wesentlichen dem Kantendurchmesser einer Bolzenmutter entspricht, auf die die Erdungsschelle 1 bei der Montage angeordnet und befestigt wird. Die Bolzenmutter ist bevorzugt eine Achtkantmutter, bei der der Abstand zwischen zwei gegenüberliegenden Kanten im Wesentlichen dem zweiten Abstand A2 zwischen der ersten und der zweiten Lasche 22, 24 entspricht. Durch das bündige Anordnen der beiden Laschen 22, 24 über der Bolzenmutter, sitzt die Erdungsschelle verdrehsicher auf der Bolzenmutter bzw. dem Bolzen als Befestigungsmittel. Der Bolzen wiederum ist fest mit der separaten Oberfläche verbunden, so dass eine feste Anordnung der Erdungsschelle auf der separaten Oberfläche entsteht.

In beiden Ausführungsformen liegt die Länge der ersten und zweiten Längskante 12, 14 bevorzugt im Bereich von 15 - 25 mm, noch bevorzugter im Bereich von 19 - 21 mm. Die Länge der ersten und zweiten Querkante 16, 18 liegt bevorzugt im Bereich von 10 - 15 mm, noch bevorzugter im Bereich von 12 - 14 mm.

In der ersten Ausführungsform liegt der zweite Abstand A2 zwischen der ersten und zweiten Lasche 22, 24 im Bereich von 16 - 22 mm, noch bevorzugter im Bereich von 18 - 20 mm. In der zweiten Ausführungsform liegt der zweite Abstand A2 zwischen der ersten und zweiten Lasche 22, 24 bevorzugt im Bereich von 8 - 16 mm, noch bevorzugter im Bereich von 11 - 13 mm

Die Erdungsschelle 1 der ersten und zweiten Ausführungsform ist bevorzugt aus einem elektrisch leitenden Material, insbesondere aus Metall, gefertigt. Insbesondere wurde die Erdungsschelle 1 in beiden Ausführungsformen aus einem Stück gefertigt.

### BEZUGSZEICHENLISTE

- 1: Erdungsschelle
- 10: Platte
- 12: erste Längskante
- 14: zweite Längskante
- 16: erste Querkante
- 18: zweite Querkante
- 20: Öffnung
- 22: erste Lasche
- 24: zweite Lasche
- 30: erster Kabelbefestigungsbereich
- 32: zweiter Kabelbefestigungsbereich
- 34: erste Kabelführung
- 36: zweite Kabelführung
- 37: Crimplasche
- 38a, b, c, d: erster, zweiter, dritter und vierter Crimpbereich
- 39a, b, c, d: erste, zweite, dritte und vierte Freimachung
- A1: erster Abstand
- A2: zweiter Abstand
- B1: erste Breite der Laschen
- B2: zweite Breite der Laschen
- D1: Dicke der Platte
- D2: Durchmesser der Öffnung
- O: Oberseite
- S: Spiegelachse
- T1: erste Tiefe der Laschen
- T2: zweite Tiefe der Laschen
- U: Unterseite
- X: erste Richtung der Platte
- Y: zweite Richtung der Platte
- Z: Richtung zu einer Unterseite der Platte

## Patentansprüche

1. Erdungsschelle (1) zum Befestigen und elektrischen Kontaktieren von zumindest zwei Kabeln an einer separaten Oberfläche, aufweisend:
eine Platte (10) mit einer ersten Längskante (12) und einer, der ersten Längskante (12) gegenüberliegenden, zweiten Längskante (14), wobei sich beide Längskanten (12, 14) in einer ersten Richtung (X) der Platte (10) erstrecken, und einer ersten Querkante (16) und einer, der ersten Querkante (16) gegenüberliegenden, zweiten Querkante (18), wobei sich beide Querkanten (16, 18) senkrecht zur ersten und zweiten Längskante (12, 14) in einer zweiten Richtung (Y) der Platte (10) erstrecken;
einen ersten Kabelbefestigungsbereich (30) zum Befestigen und elektrischen Kontaktieren eines ersten Kabels an der Platte (10), wobei sich der erste Kabelbefestigungsbereich (30) entlang der ersten Querkante (16) erstreckt;
einen zweiten Kabelbefestigungsbereich (32) zum Befestigen und elektrischen Kontaktieren eines separaten zweiten Kabels an der Platte (10), wobei sich der zweite Kabelbefestigungsbereich (32) entlang der zweiten Querkante (18) erstreckt;
eine zwischen dem ersten und zweiten Kabelbefestigungsbereich (30, 32) angeordnete Öffnung (20) zum Einführen eines Befestigungsmittels;
eine erste Lasche (22), die sich zwischen dem ersten und zweiten Kabelbefestigungsbereich (30, 32) parallel zur ersten Querkante (16) und senkrecht zur Plattenebene in Richtung (Z) einer Unterseite (U) der Platte (10) erstreckt; und
eine zweite Lasche (24), die sich zwischen dem ersten und zweiten Kabelbefestigungsbereich (30, 32) parallel zur zweiten Querkante (18) und senkrecht zur Plattenebene in Richtung (Z) der Unterseite (U) der Platte (10) erstreckt.

2. Erdungsschelle (1) nach Anspruch 1, bei der sich die erste Lasche (22) entlang der ersten Querkante (16) und die zweite Lasche (24) entlang der zweiten Querkante (18) erstreckt.

3. Erdungsschelle (1) nach Anspruch 1, bei der sich die erste Lasche (22) in einem ersten Abstand (A1) zur Öffnung (20), zwischen der Öffnung (20) und der ersten Querkante (16), und die zweite Lasche (24) in dem ersten Abstand (A1) zur Öffnung (20), zwischen der Öffnung (20) und der zweiten Querkante (18) erstreckt, so dass die Erdungsschelle (1) mit der ersten und zweiten Lasche (22, 24) verdrehsicher auf einem Teil eines Befestigungsmittels, das in der Öffnung (20) anordbar ist, anordbar ist.

4. Erdungsschelle (1) nach einem der Ansprüche 1 bis 3, bei der die Öffnung (20) kreisförmig ist.

5. Erdungsschelle (1) nach einem der Ansprüche 1 bis 4, wobei die Erdungsschelle (1) ein elektrisch leitfähiges Material aufweist, so dass eine elektrische Verbindung zwischen zumindest einem befestigbaren elektrischen Kabel und dem in die Öffnung (20) einführbaren Befestigungsmittel besteht.

6. Erdungsschelle (1) nach einem der Ansprüche 1 bis 5, wobei die Erdungsschelle (1) spiegelsymmetrisch zu einer Spiegelachse (S) aufgebaut ist, und sich die Spiegelachse (S) parallel zur ersten und zweiten Querkante (16, 18) durch den Mittelpunkt der Öffnung (20) erstreckt.

7. Erdungsschelle (1) nach einem der Ansprüche 1 bis 6, wobei der erste und zweite Kabelbefestigungsbereich (30, 32) jeweils eine Kabelführung (34, 36) und zumindest einen ersten und einen zweiten Crimpbereich (38a, b, c, d), an gegenüberliegenden Enden der jeweiligen Kabelführung (34, 36), aufweist.

8. Erdungsschelle (1) nach einem der Ansprüche 1 bis 7, bei der die Platte (10) eine längliche Platte (10) ist, und die erste Richtung (X) die Längsrichtung der Platte (10) ist.

## Claims

1. Earthing clamp (1) for fastening and electrically contact-connecting at least two cables to a separate surface, comprising:
a plate (10) with a first longitudinal edge (12) and a second longitudinal edge (14) which is situated opposite the first longitudinal edge (12), the two longitudinal edges (12, 14) extending in a first direction (X) of the plate (10), and a first transverse edge (16) and a second transverse edge (18) which is situated opposite the first transverse edge (16), the two transverse edges (16, 18) extending perpendicularly to the first and second longitudinal edge (12, 14) in a second direction (Y) of the plate (10);
a first cable fastening region (30) for fastening and electrically contact-connecting a first cable to the plate (10), the first cable fastening region (30) extending along the first transverse edge (16);
a second cable fastening region (32) for fastening and electrically contact-connecting a separate second cable to the plate (10), the second cable fastening region (32) extending along the second transverse edge (18);
an opening (20), which is arranged between the first and the second cable fastening region (30, 32), for inserting a fastening means;
a first lug (22) which extends between the first and the second cable fastening region (30, 32) parallel to the first transverse edge (16) and perpendicularly to the plate plane in the direction (Z) of a bottom side (U) of the plate (10); and
a second lug (24) which extends between the first and the second cable fastening region (30, 32) parallel to the second transverse edge (18) and perpendicularly to the plate plane in the direction (Z) of the bottom side (U) of the plate (10).

2. Earthing clamp (1) according to Claim 1, in which the first lug (22) extends along the first transverse edge (16) and the second lug (24) extends along the second transverse edge (18).

3. Earthing clamp (1) according to Claim 1, in which the first lug (22) extends at a first distance (A1) from the opening (20), between the opening (20) and the first transverse edge (16), and the second lug (24) extends at the first distance (A1) from the opening (20), between the opening (20) and the second transverse edge (18), so that the earthing clamp (1) can be arranged in a torsionally fixed manner on a portion of a fastening means, which can be arranged in the opening (20), by way of the first and the second lug (22, 24).

4. Earthing clamp (1) according to any of Claims 1 to 3, in which the opening (20) is circular.

5. Earthing clamp (1) according to any of Claims 1 to 4, wherein the earthing clamp (1) comprises an electrically conductive material, so that there is an electrical connection between at least one fastenable electrical cable and the fastening means which can be inserted into the opening (20).

6. Earthing clamp (1) according to any of Claims 1 to 5, wherein the earthing clamp (1) is constructed with mirror-image symmetry with respect to a mirror axis (S), and the mirror axis (S) extends parallel to the first and the second transverse edge (16, 18) through the centre point of the opening (20).

7. Earthing clamp (1) according to any of Claims 1 to 6, wherein the first and the second cable fastening region (30, 32) each have a cable guide (34, 36) and at least one first and one second crimping region (38a, b, c, d) at opposite ends of the respective cable guide (34, 36) .

8. Earthing clamp (1) according to any of Claims 1 to 7, in which the plate (10) is an elongate plate (10), and the first direction (X) is the longitudinal direction of the plate (10).

## Revendications

1. Collier de serrage de mise à la terre (1) servant à la fixation et à la mise en contact électrique d'au moins deux câbles sur une surface séparée, présentant :
une plaque (10) dotée d'un premier bord longitudinal (12) et d'un deuxième bord longitudinal (14) opposé au premier bord longitudinal (12), les deux bords longitudinaux (12, 14) s'étendant dans une première direction (X) de la plaque (10), et d'un premier bord transversal (16) et d'un deuxième bord transversal (18) opposé au premier bord transversal (16), les deux bords transversaux (16, 18) s'étendant perpendiculairement au premier et au deuxième bord longitudinal (12, 14) dans une deuxième direction (Y) de la plaque (10) ;
une première région de fixation de câble (30) servant à la fixation et à la mise en contact électrique d'un premier câble sur la plaque (10), la première région de fixation de câble (30) s'étendant le long du premier bord transversal (16) ;
une deuxième région de fixation de câble (32) servant à la fixation et à la mise en contact électrique d'un deuxième câble séparé sur la plaque (10), la deuxième région de fixation de câble (32) s'étendant le long du deuxième bord transversal (18) ;
une ouverture (20), disposée entre la première et la deuxième région de fixation de câble (30, 32), servant à l'insertion d'un moyen de fixation ;
une première languette (22), qui s'étend entre la première et la deuxième région de fixation de câble (30, 32) parallèlement au premier bord transversal (16) et perpendiculairement au plan de plaque dans la direction (Z) d'un côté inférieur (U) de la plaque (10) ; et
une deuxième languette (24), qui s'étend entre la première et la deuxième région de fixation de câble (30, 32) parallèlement au deuxième bord transversal (18) et perpendiculairement au plan de plaque dans la direction (Z) du côté inférieur (U) de la plaque (10).

2. Collier de serrage de mise à la terre (1) selon la revendication 1, dans lequel la première languette (22) s'étend le long du premier bord transversal (16) et la deuxième languette (24) s'étend le long du deuxième bord transversal (18).

3. Collier de serrage de mise à la terre (1) selon la revendication 1, dans lequel la première languette (22) s'étend à une première distance (A1) de l'ouverture (20), entre l'ouverture (20) et le premier bord transversal (16), et la deuxième languette (24) s'étend à la première distance (A1) de l'ouverture (20), entre l'ouverture (20) et le deuxième bord transversal (18), de sorte que le collier de serrage de mise à la terre (1) peut être disposé à l'aide de la première et de la deuxième languette (22, 24) de manière bloquée en rotation sur une partie d'un moyen de fixation qui peut être disposé dans l'ouverture (20).

4. Collier de serrage de mise à la terre (1) selon l'une des revendications 1 à 3, dans lequel l'ouverture (20) est circulaire.

5. Collier de serrage de mise à la terre (1) selon l'une des revendications 1 à 4, le collier de serrage de mise à la terre (1) présentant un matériau électro-conducteur, de sorte qu'une connexion électrique existe entre au moins un câble électrique pouvant être fixé et le moyen de fixation pouvant être inséré dans l'ouverture (20) .

6. Collier de serrage de mise à la terre (1) selon l'une des revendications 1 à 5, le collier de serrage de mise à la terre (1) étant construit en symétrie miroir par rapport à un axe miroir (S), et l'axe miroir (S) s'étendant parallèlement au premier et au deuxième bord transversal (16, 18) à travers le centre de l'ouverture (20) .

7. Collier de serrage de mise à la terre (1) selon l'une des revendications 1 à 6, la première et la deuxième région de fixation de câble (30, 32) présentant respectivement un guide de câble (34, 36) et au moins une première et une deuxième région de sertissage (38a, b, c, d), à des extrémités opposées du guide de câble (34, 36) respectif.

8. Collier de serrage de mise à la terre (1) selon l'une des revendications 1 à 7, dans lequel la plaque (10) est une plaque allongée (10), et la première direction (X) est la direction longitudinale de la plaque (10) .
